Europäisches Patentamt

(19) European Patent Office

Office européen des brevets

(11) .Veröffentlichungsnummer : **0 203 407**
**B1**

(12) **EUROPÄISCHE PATENTSCHRIFT**

(45) Veröffentlichungstag der Patentschrift :
24.01.90

(21) Anmeldenummer : 86105989.7

(22) Anmeldetag : 30.04.86

(51) Int. Cl.⁵ : **A 23 L   1/01, A 47 J  27/16**

(54) Vorrichtung zur Regelung einer Wärmebehandlung von Nahrungsmitteln.

(30) Priorität : 23.05.85 DE 3518498

(43) Veröffentlichungstag der Anmeldung :
03.12.86 Patentblatt 86/49

(45) Bekanntmachung des Hinweises auf die Patenterteilung : 24.01.90 Patentblatt 90/04

(84) Benannte Vertragsstaaten :
AT BE CH DE FR GB IT LI LU NL SE

(56) Entgegenhaltungen :
DE--C-- 2 731 191
GB--A-- 1 161 551
US--A-- 4 506 598

(73) Patentinhaber : LechMetall Landsberg GmbH
Iglinger Strasse 62
D-8910 Landsberga. Lech (DE)

(72) Erfinder : Meister, Siegfried
Siemensstrasse 2
D-8910 Landsberg (DE)

(74) Vertreter : Goddar, Heinz J., Dr. et al
FORRESTER & BOEHMERT Widenmayerstrasse 4/I
D-8000 München 22 (DE)

EP 0 203 407 B1

## Beschreibung

Die Erfindung betrifft eine Vorrichtung zur Regelung einer Wärmebehandlung von Nahrungsmitteln nach dem einleitenden Teil des Patentanspruches 1.

Bei einer bekannten Vorrichtung dieser Art (US-A-4 506 598) wird die Regelung derart durchgeführt, daß das Eindringen überschüssigen Dampfes in eine im Garraumboden angeordnete Kondensatableitung durch einen in der Kondensatableitung angeordneten Temperaturfühler erfaßt wird. Eine derartige verfahrensmäßige Regelung der Dampfzufuhr in den Garraum liefert unter gewöhnlichen Bedingungen auch zufriedenstellende Ergebnisse. Andererseits sind aber mit dem bekannten Verfahren auch Nachteile verbunden. Das durch den Kondensatabzug ablaufende Kondensat und insbesondere auch das — wie jedenfalls teilweise vorgesehen — durch diesen auch ablaufende, von den Speisen herabtropfende Fett, heizt den Kondensatabzug auf. Hierdurch wird der Temperaturfühler ständig mit einer relativ hohen Temperatur beaufschlagt. Zwar ist es möglich, den Temperaturfühler in größerer Entfernung zu einer Garraummündung des Kondensatabzugs anzuordnen. Dies wirkt sich jedoch nachteilig auf die Regelungsgeschwindigkeit aus, da dann der überschüssige Dampf zunächst eine beträchtliche Strecke in den Kondensatabzug eindringen muß, bevor aufgrund eines Ansprechen des Meßfühlers eine Abschaltung der Dampfproduktion erfolgen kann. Eine ähnliche Vorrichtung betrifft die DE-C-2 731 191.

Der Erfindung liegt die Aufgabe zugrunde, die Vorrichtung der eingangs beschriebenen Art dahingehend weiterzubilden, daß eine jederzeit zuverlässige und schnelle Regelung möglich ist.

Erfindungsgemäß wird diese Aufgabe durch die in dem kennzeichnenden Teil des Patentanspruches 1 genannten Merkmale gelöst.

Bei der Vorrichtung nach der Erfindung wird der Garraumströmung im Bereich einer ständigen, den Meßfühler enthaltenden Verbindungsöffnung zwischen dem Garraum und der Umgebung eine Strömungsstörung aufgezwungen, wodurch ein örtlicher Unterdruck entsteht. Gemäß dieser Lehre wird während einer Betriebsart, in der in dem Garraum eine Strömung ausgebildet ist, ein ständiges Einsaugen von Umgebungsatmosphäre durch den Kondensatabzug in den Garraum verursacht. Die relativ kühle Umgebungsatmosphäre kühlt so ständig den Meßfühler. Wenn darauf, beispielsweise bei einer Betriebsart Dämpfen, der Druck im Innenraum des Garraumes ansteigt, ist auch der — niedrigere — Druck am Eingang der Garraummündung höher als der Druck der Umgebungsatmosphäre. Darauf dringt dann die Garraumatmosphäre in die Garraummündung ein. Sobald die Garraumatmosphäre die Höhe des Meßfühlers erreicht, spricht dieser aufgrund der wesentlich höheren Temperatur der Garraumatmosphäre an und eine Dampfproduktion kann abgeschaltet werden.

Bei der Vorrichtung nach der Erfindung ist der Temperatursprung, der von dem Meßfühler erfaßt wird, praktisch immer relativ groß. Zum einen bedeutet dies, daß der Temperaturfühler nicht besonders empfindlich sein muß, zum anderen aber auch, daß zufälligere, kleinere Schwankungen keine Fehlschaltungen auslösen können.

Bei einer bekannten Vorrichtung, wie sie beispielsweise in der bereits genannten DE-C-2 731 191 beschrieben ist, ist der Meßfühler in dem Kondensatabzug angeordnet. Wenn beispielsweise in der Betriebsart Dämpfen ein in dem Garraum befindliches Gargut so weit erhitzt ist, daß sich der Dampf im Garraum nicht mehr niederschlägt, tritt der Dampf durch die Verbindungsöffnung, also im Fall dieser bekannten Vorrichtung, durch den Kondensatabzug, aus. Durch den Meßfühler kann dies aufgrund der erhöhten Temperatur des Dampfes erfaßt werden und in Abhängigkeit davon ist die Dampfversorgung des Garraumes abschaltbar. Auch bezüglich dieser Vorrichtung treten die schon weiter oben im Hinblick auf das bekannte Verfahren angeführten Nachteile auf. Während der normalen Betriebszustände erhitzt sich der Kondensatabzug selbst in beträchtlichem Maße und beeinflußt so die Temperaturmessung über dem Meßfühler.

Durch das Strömungshindernis wird bei der Vorrichtung nach der Erfindung eine örtliche Beschleunigung der Strömung in dem Garraum verursacht, was zu einem Abfall des statischen Druckes und damit einem Unterdruck im Bereich der Garraummündung führt. So entsteht zwischen der Garraummündung und der Umgebung ein Druckgefälle, und wird Umgebungsatmosphäre in den Garraum eingesaugt.

Wie gleichfalls grundsätzlich bereits erläutert, kühlt die einströmende Umgebungsluft, so lange der statische Druck an der Garraummündung geringer ist als der Druck in der Umgebungsatmosphäre, die Verbindungsöffnung bzw. den Kondensatabzug ab oder hält diese bzw. den auf einem relativ niedrigen Temperaturniveau. Wenn dann, wie auch bereits erläutert, der Druck in dem Garraum ansteigt, übersteigt auch der (abgefallene) statische Druck an der Garraummündung den Druck der Umgebungsatmosphäre, so daß dann die Garraumatmosphäre, im wesentlichen Dampf, durch den Kondensatabzug nach draußen dringt. Sobald die Garraumatmosphäre die Höhe des Meßfühlers erreicht, erfaßt dieser die wesentlich höhere Temperatur und kann eine Schaltung, also insbesondere eine Dampfabschaltung, auslösen.

Der bezüglich des verfahrensmäßigen Teils der Erfindung verwendete Ausdruck « Strömungsstörung » wie auch der bezüglich des vorrichtungsmäßigen Teils der Erfindung verwendete Ausdruck « Strömungshindernis » sind im Hinblick auf ihre Funktion gleichzusetzen. In beiden Fällen soll erreicht werden, daß im Bereich der Garraummündung der statische Druck der Strömung herabgesetzt wird, zur Erzeugung eines — örtlichen — Unterdruckes. Grundsätzlich macht sich die Erfindung also das Venturi-Prinzip zunutze, daß der statische Druck einer Strömung durch Erhöhung der Geschwindigkeit, also des dynamischen Druckes der Strömung verringert werden kann.

Eine besonders bevorzugte Ausführungsform der Erfindung — insgesamt sind Weiterbildungen der Erfindung Gegenstand der Unteransprüche —, bei der vorgesehen ist, daß durch die Verbindungsöffnung austretende Garraumatmosphäre gekühlt wird, kommt dieser Lehre auch eigenständige Bedeutung zu. Von besonderer Bedeutung ist diese Lehre im Zusammenhang mit einer gegenüber dem Vorsehenden etwas abgewandelten Vorrichtung. Nämlich einer Vorrichtung, bei der eine den Garraum mit der Atmosphäre verbindende selbständige Verbindungsöffnung, also beispielsweise ein Meßfühlerrohr, vorgesehen ist. Eine derartige Ausgestaltung ist auch Gegenstand der EP-A-85 106 278 auf die insoweit verwiesen wird.

Wenn bei der Vorrichtung nach der Erfindung die durch die Verbindungsöffnung austretende Garraumatmosphäre gekühlt wird, ist es möglich, austretenden Dampf niederzuschlagen und das Kondensat abzuführen. Die Kühlung selbst kann auf recht unterschiedliche Art durchgeführt werden, wie dies weiter unten im Hinblick auf die entsprechenden vorrichtungsmäßigen Merkmale noch im einzelnen erläutert ist. So kann der Joule-Thomson-Effekt ausgenutzt werden, daß bei einer Volumenvergrößerung eines Gases eine Abkühlung dieses Gases auftritt. Des weiteren kann eine aktive Kühlung über Kühlrippen, einen Kühlmantel oder dergleichen, vorgesehen sein.

In vorrichtungsmäßiger Hinsicht ist eine weitere Ausbildung dadurch gegeben, daß die Verbindungsöffnung durch ein Rohrteil gebildet ist und daß das Rohrteil in den Garraum hineinragt. Hierbei ist in erster Linie daran gedacht, daß das Rohrteil eine eigenständige Verbindung zwischen dem Garraum und der Umgebungsatmosphäre darstellt, also nicht mit etwa dem Kondensatabzug zusammenfällt. Natürlich kann dies aber auch der Fall sein. Das hineinragen des Rohrteiles in den Garraum bewirkt schon für sich eine Strömungsstörung, die zu dem erwünschten Unterdruck im Bereich der Garraummündung des Rohrteils führt. (Rohrteil ist hier nicht im streng geometrischen Sinne zu verstehen, sondern als allgemeiner Ausdruck für ein eigenes, eine Verbindungsöffnung darstellendes Bauteil).

In weiter Ausgestaltung kann dann vorgesehen sein, daß das Strömungshindernis als eigenes Bauteil in Form eines Abweisers oder dergleichen, ausgebildet ist. Zweckmäßigerweise ist das Strömungshindernis dann in Strömungsrichtung vor der Garraummündung angeordnet, oder unmittelbar im Bereich der Garraummündung. Derartige Strö-mungshindernisse sind in vielfältiger Form bekannt, weshalb auf eine Beschreibung im einzelnen hier verzichtet wird. Wesentlich ist, wie auch bereits angedeutet, daß im Bereich der Garraummündung eine Strömungsbeschleunigung auftritt.

In weiterer Ausgestaltung ist vorgesehen, daß die Garraummündung einen relativ großen Durchmesser aufweist bzw. zumindest in einer solchen Größe vorgesehen ist, daß sie vom Garraum aus leicht reinigbar ist. Grundsätzlich ist es nicht erforderlich, daß — bei einer gesonderten Verbindungsöffnung —, die Garraummündung bzw. die Verbindungsöffnung selbst einen sonderlich großen Durchmesser besitzt. Im Gegenteil ist ein relativ kleiner Durchmesser vorteilhaft, dadurch diesen während des normalen Dämpfbetriebes nur entsprechend wenig Umgebungsatmosphäre angesaugt wird. Jedoch kann bei einer Garraummündung mit kleinem Durchmesser sehr leicht eine Verschmutzung und Zusetzung der Verbindungsöffnung auftreten. Diese Gefahr ist bei einer relativ großen Garraummündung praktisch nicht gegeben, da ja, wie ausgeführt, bei einem erfindungsgemäßen Verfahren und einer erfindungsgemäßen Vorrichtung die Strömung in dieser Garraummündung während des normalen Dämpfbetriebes in den Garraum hinein gerichtet ist.

Entsprechend ist im Rahmen der Erfindung dann auch weiter vorgesehen, daß sich an die Garraummündung nach außen hin eine Saugöffnung kleineren Durchmessers anschließt. Nur der Durchmesser dieser Saugöffnung ist bestimmend für die während normalen Dämpfbetriebes pro Zeiteinheit angesaugte Menge an Umgebungsatmosphäre.

In weiterer Ausgestaltung der erfindungsgemäßen Vorrichtung lehrt die Erfindung, daß eine zweite Garraummündung vorgesehen ist, die mit der ersten Garraummündung außerhalb des Garraums in Strömungsverbindung steht, daß die zweite Garraummündung unterhalb der ersten Garraummündung angeordnet ist und daß im Bereich der zweiten Garraummündung eine ungestörte Strömung gegeben ist. Von der Verbindung zwischen den beiden Garraummündungen zweigt dann entsprechend die Verbindungsöffnung zur Umgebungsatmosphäre oder beispielsweise die Saugöffnung ab. Zweckmäßigerweise ist der Meßfühler bei dieser Ausgestaltung im Bereich der Saugöffnung bzw. der Verbindungsöffnung angebracht. Bei dieser Ausgestaltung wird ein Vorteil darin gesehen, daß etwa während des normalen Dämpfbetriebes, wobei sich als ein Unterdruck an der oberen Garraummündung ausbildet, durch die untere Garraummündung Garraumatmosphäre angesogen wird und durch die obere Garraummündung dann wieder in den Garraum eintritt. Der Umgebungsatmosphäre ansaugende Unterdruck ist dann also im Bereich der Abzweigung der Verbindungsöffnung wirksam. Eventuell strömungsmäßig mitgerissene Schmutzpartikel oder dergleichen, setzen sich in der Verbindung zwischen den beiden Garraummündungen ab. Insbesondere können aber derartige Verunreinigungen, die weitestgehend flüssig sein werden, durch die untere Garraummündung in den Garraum zurückfließen.

Gemäß einer weiteren Ausgestaltung, der auch eigenständige Bedeutung zukommt, schließt sich nach außen hin an die Verbindungsöffnung ein Ausströmteil an, durch das die austretende Garraumatmosphäre kühlbar ist. In der austretenden Garraumatmosphäre enthaltender Dampf kann so niedergeschlagen und als Kondensat abgeführt werden.

Die Kühlung selbst kann auf verschiedene Arten durchgeführt werden. Beispielsweise kann das Ausströmteil zunächst äußere Kühlrippen aufweisen, die eine erhöhte Wärmezufuhr dieses Teiles ermöglichen. Weiter kann das Ausströmteil mit einem Kühlmantel versehen sein, durch den eine Kühlflüssigkeit geleitet werden kann. Schließlich kann das Ausströmteil auch in Bezug auf die Verbindungsöffnung eine plötzliche Strömungserweiterung darstellen. Unter Ausnützung des Joule-Thomson-Effektes ist so desgleichen eine Abkühlung der austretenden Garraumatmosphäre bewirkbar.

Das in dem Ausströmteil ausfallende Kondensat kann gesondert abgeführt werden, aber auch über eine Kondensatableitung in den Kondensatabzug münden und sodann mit vom Garraumboden abgezogenem Kondensat zusammen abgeführt werden.

Eine besondere Ausgestaltung ist schließlich noch dadurch gegeben, daß die Verbindungsöffnung als solche an den Kondensatabzug angeschlossen ist. Bei dieser Ausgestaltung ist die Garraummündung zwar als gesonderte Mündung zusätzlich zu der Mündung des Kondensatabzuges vorgesehen, jedoch geschieht die Ansaugung der Umgebungsatmosphäre während des normalen Dämpfbetriebes durch die Mündung des Kondensatabzuges in die Umgebungsatmosphäre.

Nachstehend ist die Erfindung anhand von Ausführungsbeispielen unter Bezugnahme auf die Zeichnung im einzelnen erläutert. Dabei zeigt :

Fig. 1 ein erstes Ausführungsbeispiel einer Vorrichtung nach der Erfindung ;

Fig. 2 eine vergrößerte Darstellung einer Verbindungsöffnung mit einem zur Kühlung geeigneten Ausströmteil ;

Fig. 3 eine Draufsicht auf den Gegenstand von Fig. 2 ;

Fig. 4 eine abgewandelte Ausführungsform einer Verbindungsöffnung mit einem Ausströmteil ; und

Fig. 5 eine prinzipmäßige Darstellung einer Ausführungsform mit einer oberen und einer unteren Garraummündung.

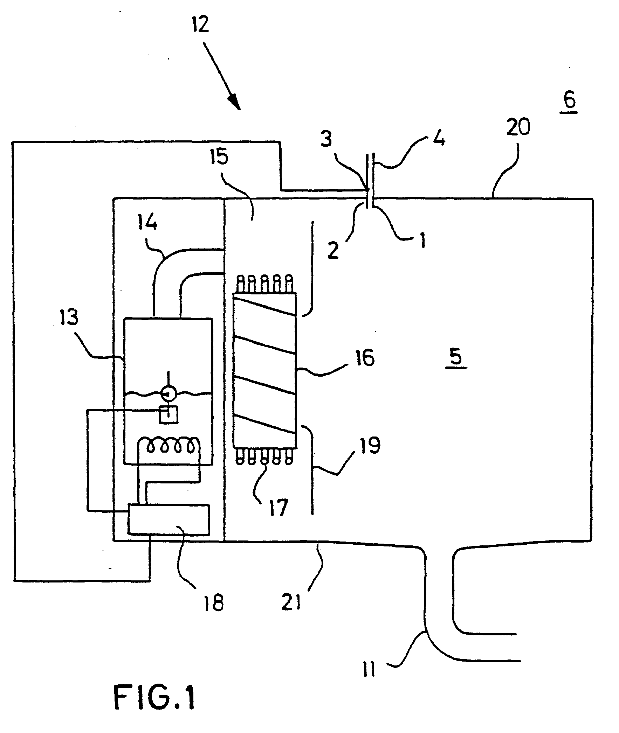

Bei der in Fig. 1 dargestellten Vorrichtung ist zunächst ein grundsätzlicher Aufbau einer Vorrichtung 12 zur Wärmebehandlung von Speisen zu erkennen, bei der die hier beschriebene Erfindung angewandt werden kann. Diese Vorrichtung 12 weist einen Boiler 13 auf, in dem Dampf produziert werden kann. Der Boiler 13 steht über eine Dampfzuleitung 14 mit einem Druckraum 15 in Verbindung. In dem Druckraum 15 ist ein Ventilator 16 angeordnet, der, wie bei dem dargestellten Ausführungsbeispiel, von einer Heizspirale 17 umgeben sein kann. Über eine Steuerung 18 kann, insbesondere in der Betriebsart Dämpfen, wie nachstehend noch zu erläutern ist, die Dampfproduktion geregelt werden, in Abhängigkeit der Meßwerte des Meßfühlers 3.

Der Druckraum 15 ist von dem Garraum 5 durch ein Wandteil 19, gewöhnlich einem Blechteil, abgetrennt. Bei Betrieb des Ventilators 16 bildet sich in dem Garraum 5 daher eine Strömung aus, die oben und unten zwischen der Garraumdecke 20 bzw. dem Garraumboden 21 und dem Wandteil 19 austritt und dann etwa mittig zu dem Ventilator 16 in diesen zurückströmt.

Eine derartige Vorrichtung 12 dient ganz allgemein dazu insbesondere kalte Speisen durch Dämpfen zu behandeln. Tiefgefrorene Speisen bzw. Lebensmittel werden aufgetaut und erwärmt. Andere Zubereitungsvorgänge, wie etwa Kochen, Braten und Backen, werden in einem Heißluftbetrieb oder einem sogenannten Kombi-Dämpfenbetrieb durchgeführt, bei dem die Speisen bzw. Lebensmittel mit einem Gemisch aus Dampf und Heißluft beaufschlagt werden.

Wie in Fig. 1 darüberhinaus zu erkennen ist, ist bei diesem Ausführungsbeispiel die Verbindungsöffnung zwischen dem Garraum 5 und der Umgebung 6 durch ein Rohrteil 4 realisiert. Um den grundsätzlichen Erfolg der Erfindung zu erreichen, ist es jedoch nicht erforderlich, daß die Verbindungsöffnung durch ein Rohrteil 4 realisiert ist. Vielmehr stellt sich der Erfolg auch schon ein, wenn als Verbindungsöffnung der vorhandene Kondensatabzug 11 verwendet wird. Darüberhinaus braucht die Verbindungsöffnung bzw. das Rohrteil 4 nicht, wie in Fig. 1 dargestellt, an der Garraumdecke 20 angeordnet zu sein. Es ist eine Anordnung praktisch an jedem Ort des Garraumes 5 denkbar, soweit noch eine spürbare Anströmung gegeben ist.

Bei Einschaltung des Ventilators 16 bildet sich, wie schon erwähnt, in dem Spalt zwischen dem Wandteil 19 und der Garraumdecke eine Strömung aus, die durch das bei dem Ausführungsbeispiel in den Garraum 5 vorstehende Rohrteil 4 im Bereich der Garraummündung 1 gestört wird. Das in den Garraum 5 vorstehende Teil des Rohrteils 4 bildet hierbei gleichzeitig das Strömungshindernis 2. Es stellt sich im Bereich der Garraummündung 1 eine Strömungsbeschleunigung und damit gleichzeitig ein statischer Druckabfall ein, so daß zwischen der Umgebung 6 und dem Garraum 5 im Bereich der Garraummündung 1 eine Druckdifferenz gegeben ist, die Umgebungsatmosphäre in den Garraum 5 einsaugt. Dadurch wird der Meßfühler 3 ständig auf etwa der Temperatur der Umgebungsatmosphäre gehalten. Wenn in der Betriebsart Dämpfen bzw. Kombi-Dämpfen der in den Garraum 5 zusätzlich eingebrachte Dampf sich nicht mehr an den Speisen niederschlägt und kondensiert, steigt der Druck in dem Garraum 5, so daß schließlich auch die Druckdifferenz zwischen der Garraummündung 1 und der Umgebung 6 aufgehoben wird, bzw. sich umkehrt. Dann dringt Garraumatmosphäre durch die Verbindungsöffnung nach außen und der Meßfühler 3 erfaßt die erhöhte Temperatur der Garraumatmosphäre.

Über die Steuerung 18 wird dann bewirkt, daß die Dampfproduktion in dem Boiler 13 abgeschaltet wird. Der zu diesem Zeitpunkt aber immer noch zu einem beträchtlichen Anteil in dem Garraum 5 enthaltene Dampf kondensiert weiter auch in dem Garraum. Die damit verbundene beträchtliche Volumenänerung führt zu einem Unterdruck in dem Garraum 5 gegenüber der Umgebung 6, wodurch zusätzliche Umgebungsatmosphäre durch die Verbindungsöffnung in den Garraum 5 eingesaugt wird. Dadurch wird der Meßfühler 3 wieder mit einer niedrigeren Temperatur beaufschlagt. In Abhängigkeit hiervon kann dann über die Steuerung 18 die Dampfproduktion in dem Boiler 13 wieder aktiviert werden.

Ein besonderer Vorteil der erfindungsgemäßen Vorrichtung bzw. des erfindungsgemäßen Verfahrens ist gegeben, wenn von der Betriebsart Heißluft auf die Betriebsart Dämpfen bzw. auf die Betriebsart Kombi-Dämpfen umgestellt wird. Während der Betriebsart Heißluft heizt sich der Garraum 5 sehr stark auf, auf Temperaturen um oder über 200 °C. Wenn dann die Dampfproduktion zugeschaltet wird, wird der einströmende Dampf rasch überhitzt und es kommt sehr schnell zu einer Druckerhöhung, die die Garraumatmosphäre an der Verbindungsöffnung austreten läßt. Hierbei spricht der Meßfühler 3 an und schaltet die Dampfproduktion ab. Bei Weiterfortführung des Dämpf- bzw. Kombi-Dämpfbetriebes wird aber bei einem erfindungsgemäßen Verfahren bzw. einer erfindungsgemäßen Vorrichtung sogleich wieder Umgebungsatmosphäre angesaugt und der Meßfühler 3 erfährt eine entsprechende Abkühlung, so daß über die Steuerung 18 die Dampfproduktion in dem Boiler 13 wieder aktiviert wird.

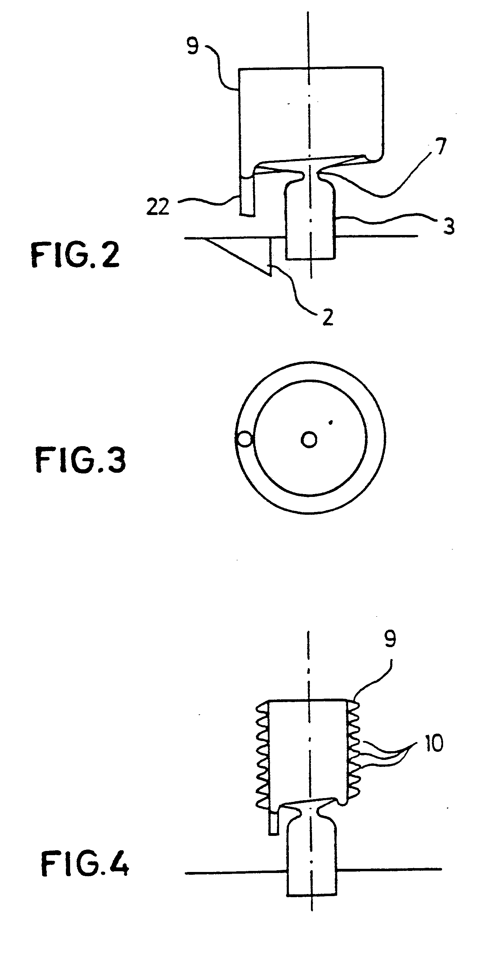

Das Strömungshindernis 2 kann, wie auch bereits weiter vorne schon beschrieben, auf sehr verschiedene Weise ausgestaltet sein. Bei dem Ausführungsbeispiel gemäß Fig. 2 ist beispielsweise ein Strömungshindernis 2 in Form eines in Strömungsrichtung vor dem Rohrteil 4 angeordneten, etwa dreiecksförmigen Leitbleches zu erkennen. Dieses bewirkt eine Beschleunigung der Strömung im Bereich des Rohrteiles 4, verbunden mit einer Absenkung des statischen Druckes. Hierbei ist es natürlich nicht erforderlich, daß das Rohrteil 4, wie in Fig. 2 dargestellt, in den Garraum 5 hineinragt. Es kann auch eben mit der Garraumdecke 20 abschließen.

Wie beispielsweise in Fig. 4 zu erkennen ist, ist die Garraummündung 1 in einer solchen Größe vorgesehen, daß sie vom Garraum 5 aus reinigbar ist.

An die Garraummündung 1 schließt sich zur Umgebung 6 hin eine Saugöffnung 7 an, die einen wesentlich kleineren Durchmesser als die Garraummündung 1 aufweist.

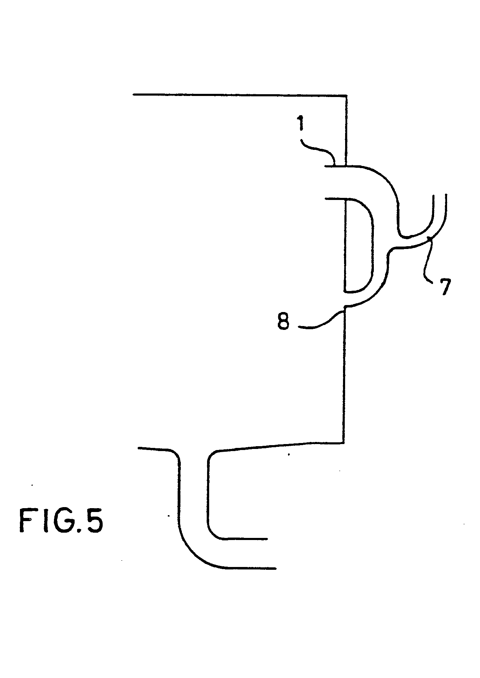

Bei der in Fig. 5 dargestellten Ausführungsform ist eine zweite Garraummündung 8 vorgesehen, die unterhalb der ersten Garraummündung 1 angeordnet ist. Außerhalb des Garraumes 5 stehen die erste Garraummündung 1 und die zweite Garraummündung 8 in Strömungsverbindung. Bevorzugt, wie in Fig. 5 zu erkennen, weist diese Verbindung jedenfalls in ihrem unteren Bereich einen kleineren, vorzugsweise etwa halb so großen Durchmesser wie im oberen Bereich, d. h. im Bereich der ersten Garraummündung 8, auf. Von dieser Strömungsverbindung zweigt dann die Saugöffnung 7 ab, an die sich natürlich im übrigen eine Ausgestaltung anschließen kann, wie sie etwa in den Fig. 2 und 4 dargestellt ist.

Bei den in den Fig. 2 und 4 dargestellten Ausführungsbeispielen sind verschiedene Ausgestaltungen eines Ausströmteils 9 zu erkennen, das eine Kühlung der austretenden Garraumatmosphäre ermöglicht. Bei dem Ausführungsbeispiel gemäß Fig. 2 ist lediglich eine einfache, plötzliche Strömungserweiterung gegeben. Das aufgrund der Abkühlung der austretenden Garraumatmosphäre sich bildende Kondensat kann durch die Kondensatableitung 22 abgeführt werden.

Wie bereits weiter vorne erläutert, kann die Kondensatableitung 22 dann auch weiter mit dem Kondensatabzug 11 in Verbindung stehen. Darüber hinaus kann auch die gesamte Verbindungsöffnung, also beispielsweise das Rohrteil 4 mit dem Kondensatabzug 11 in Verbindung stehen.

Bei dem Ausführungsbeispiel gemäß Fig. 4 weist das Ausströmteil 9 äußere Kühlrippen 10 auf. Diese Maßnahme kann natürlich sowohl in Kombination mit der plötzlichen Strömungserweiterung wie auch gesondert vorgesehen sein. Darüber hinaus kann das Ausströmteil 9, was nicht dargestellt ist, beispielsweise einen Kühlmantel aufweisen, durch den Kühlflüssigkeit strömen kann.

Bezugszeichenliste
(List of Reference Numerals)

1 Garraummündung
2 Strömungshindernis
3 Meßfühler
4 Rohrteil
5 Garraum
6 Umgebung
7 Saugöffnung
8 Garraummündung
9 Ausströmteil
10 Kühlrippe
11 Kondensatabzug
12 Vorrichtung
13 Boiler
14 Dampfzuleitung
15 Druckraum
16 Ventilator
17 Heizspirale
18 Steuerung
19 Wandteil
20 Garraumdecke
21 Garraumboden
22 Kondensatableitung

**Patentansprüche**

1. Vorrichtung zur Regelung einer Wärmebehandlung von Nahrungsmitteln, insbesondere einer Zubereitung von Speisen, mittels Dampf oder eines Dampf-/Luftgemisches, mit einem Garraum (5), einer nach Maßgabe eines Meßfühlers (3) regelbaren Dampfversorgung, einer eine Garraummündung (1) aufweisenden Stände ständigen Verbindungsöffnung zwischen dem Garraum (5) und der Umgebung, Mitteln zur Ausbildung einer Garraumströmung und einem Kondensatabzug (11), dadurch gekennzeichnet, daß im Bereich der Garraummündung (1) ein nach dem Venturi-Prinzip einen örtlichen unterdruck hervorrufendes Strömungshindernis (2) vorgesehen ist und daß der Meßfühler (3) in der Garraummündung (1) angeordnet ist.

2. Vorrichtung nach Anspruch 1, dadurch gekennzeichnet, daß die Verbindungsöffnung durch ein Rohrteil (4) gebildet ist und daß das Rohrteil (4) in den Garraum (5) hineinragt.

3. Vorrichtung nach Anspruch 1 oder 2, dadurch gekennzeichnet, daß ein Strömungshindernis (2), in Form eines Abweisers oder dergleichen, in Strömungsrichtung vor der Garraummündung (1) angeordnet ist.

4. Vorrichtung nach einem der vorangehenden Ansprüche, dadurch gekennzeichnet, daß die Garraummündung (1) in einer solchen Größe vorgesehen ist, daß sie vom Garraum (5) aus reinigbar ist.

5. Vorrichtung nach Anspruch 4, dadurch gekennzeichnet, daß sich zur Umgebung (6) hin an die Garraummündung (1) eine Saugöffnung (7) kleineren Durchmessers anschließt.

6. Vorrichtung nach einem der vorangehenden Ansprüche, dadurch gekennzeichnet, daß eine zweite Garraummündung (8) vorgesehen ist, die mit der ersten Garraummündung (1) außerhalb des Garraums (5) in Strömungsverbindung steht, daß die zweite Garraummündung (8) unterhalb der ersten Garraummündung (1) angeordnet ist und daß im Bereich der zweiten Garraummündung (8) eine im wesentlichen ungestörte Strömung gegeben ist.

7. Vorrichtung nach einem der vorangehenden Ansprüche, dadurch gekennzeichnet, daß sich nach außen an die Verbindungsöffnung ein Ausströmteil (9) anschließt, durch das austretende Garraumatmosphäre kühlbar ist.

8. Vorrichtung nach Anspruch 7, dadurch gekennzeichnet, daß das Ausströmteil (9) äußere Kühlrippen (10) aufweist.

9. Vorrichtung nach Anspruch 7 oder 8, dadurch gekennzeichnet, daß das Ausströmteil (9) einen Kühlmantel aufweist.

10. Vorrichtung nach einem der Ansprüche 7 bis 9, dadurch gekennzeichnet, daß das Ausströmteil (9) in Bezug auf die Verbindungsöffnung eine plötzliche Strömungserweiterung darstellt.

11. Vorrichtung nach einem der Ansprüche 7 bis 10, dadurch gekennzeichnet, daß an dem Ausströmteil (9) anfallendes Kondensat in den Kondensatabzug (11) ableitbar ist.

12. Vorrichtung nach Anspruch 11, dadurch gekennzeichnet, daß die Verbindungsöffnung an den Kondensatabzug (11) angeschlossen ist.

## Claims

1. Apparatus for adjusting the heat treatment of food, more particularly for preparing meals, by means of steam or a steam/air mixture, comprising a cooking chamber (5), a steam supply adjustable via a sensor (3), a permanent connecting opening between the cooking chamber (5) and atmosphere and comprising a cooking-chamber mouth (1), means for producing a flow in the cooking chamber and a condensate outlet (11), characterised in that an obstacle (2) to flow producing a local negative pressure in accordance with the venturi principle is disposed near the cooking-chamber mouth (1) and the sensor (3) is disposed in the mouth (1).

2. Apparatus according to claim 1, characterised in that the connecting opening is a tube (4) and the tube (4) projects into the cooking chamber (5).

3. Apparatus according to claim 1 or 2, characterised in that an obstacle (2) to flow in the form of a deflector or the like is disposed in front of the mouth (1) as considered in the flow direction.

4. Apparatus according to any of the preceding claims, characterised in that the mouth (1) is given a size such that it can be reached and cleaned from the cooking chamber (5).

5. Apparatus according to claim 4, characterised in that a smaller-diameter suction opening (7) to atmosphere (6) is adjacent the mouth (1).

6. Apparatus according to any of the preceding claims, characterised in that a second cooking-chamber mouth (8) is provided and is in flow connection with the first mouth (1) outside the cooking chamber (5), the second mouth (8) is disposed underneath the first mouth (1), and substantially undisturbed flow is provided near the second mouth (8).

7. Apparatus according to any of the preceding claims, characterised in that an outflow part (9) is externally adjacent the connecting opening and the cook ing-chamber atmosphere can be cooled as it flows out through it.

8. Apparatus according to claim 7, characterised in that the outflow part (9) has external cooling ribs (10).

9. Apparatus according to claim 7 or 8, characterised in that the outflow part (9) has a cooling jacket.

10. Apparatus according to any of claims 7 to 9, characterised in that the outflow part (9) constitutes a sudden flow widening relative to the connecting opening.

11. Apparatus according to any of claims 7 to 10, characterised in that condensate formed at the outflow part (9) can be discharged into the outlet (11).

12. Apparatus according to claim 11, characterised in that the connecting opening is connected to the condensate outlet (11).

## Revendications

1. Dispositif de régulation d'un traitement thermique de produits alimentaires, en particulier d'une préparation de repas, au moyen de vapeur ou d'un mélange vapeur-air, avec une chambre de traitement (5), une alimentation de vapeur réglable selon les indications d'un détecteur (3), une ouverture de liaison permanente, entre la chambre de traitement (5) et l'environnement, offrant une sortie (1) à la chambre de traitement, des moyens pour créer une circulation dans la chambre de traitement et une évacuation de condensat (11), caractérisé par le fait que, au voisinage de la sortie de la chambre de traitement, est prévu un obstacle (2) à la circulation suscitant une dépression locale, selon le principe de Venturi, et le détecteur (3) est situé dans la sortie (1) de la chambre de traitement.

2. Dispositif selon la revendication 1, caractérisé par le fait que l'ouverture de liaison est formée par une partie tubulaire (4) et la partie tubulaire (4) fait saillie dans la chambre de traitement (5).

3. Dispositif selon la revendication 1 ou 2, caractérisé par le fait qu'il est prévu en amont de la sortie (1) de la chambre de traitement un obstacle (2) à circulation, en forme d'une butée ou analogue.

4. Dispositif selon l'une des revendications précédentes, caractérisé par le fait que la sortie (1) de la chambre de traitement est prévu de dimension telle qu'elle est nettoyable depuis la chambre de traitement (5).

5. Dispositif selon la revendication 4, caractérisé par le fait qu'en allant vers l'environnement, se raccorde à la sortie (1) de la chambre de traitement un orifice d'aspiration (7) de plus petit diamètre.

6. Dispositif selon l'une des revendications précédentes, caractérisé par le fait qu'il est prévu à la chambre de traitement, une seconde sortie (8) qui est en liaison de circulation, à l'extérieur de la chambre de traitement (5), avec la première sortie (1) de la chambre de traitement, la seconde sortie (8) de la chambre de traitement est située en-dessous de la première sortie (1) de la chambre de traitement et, au voisinage de la seconde sortie (8) de la chambre de traitement, se forme une circulation, en principe, non perturbée.

7. Dispositif selon l'une des revendications précédentes, caractérisé par le fait que, vers l'extérieur, se raccorde à l'ouverture de liaison une partie échappement (9) par laquelle peut être refroidie l'atmosphère sortant de la chambre de traitement.

8. Dispositif selon la revendication 7, caractérisé par le fait que la partie échappement (9) possède des nervures de refroidissement (10) extérieures.

9. Dispositif selon la revendication 7 ou 8, caractérisé par le fait que la partie échappement (9) possède une enveloppe de refroidissement.

10. Dispositif selon l'une des revendications 7 à 9, caractérisé par le fait que la partie échappement (9), représente, par rapport à l'ouverture de liaison, un subit élargissement de circulation.

11. Dispositif selon l'une des revendications 7 à 10, caractérisé par le fait que le condensat qui se dépose sur la partie échappement (9) est dérivable dans l'évacuation de condensat (11).

12. Dispositif selon la revendication 11, caractérisé par le fait que l'ouverture de liaison est raccordée à l'évacuation de condensat.

FIG.1

9

7

22

3

**FIG.2**

2

**FIG.3**

9

10

**FIG.4**

FIG.5